# DEMANDE DE BREVET EUROPEEN

(11) **EP 0 882 883 A1**
(43) Date de publication de la demande: **09.12.1998**
(21) Numéro de dépôt: 98401328.4
(22) Date de dépôt: 04.06.1998
(51) Int. Cl.: F02K 1/70

(54) **Inverseur de poussée de turboréacteur à portes formant écopes associées à un déflecteur mobile**

(30) Priorité: 05.06.1997 FR 9706943
(71) Demandeur: Hispano-Suiza Aérostructures, 76700 Gonfreville l'Orcher (FR)
(72) Inventeur: Gonidec, Patrick, 76290 Montivilliers (FR); Portal, Jean Fabrice Marcel, 76310 Ste Adresse (FR); Studer, Vincent Joseph Rodolphe, 76600 Le Havre (FR); Vauchel, Guy Bernard, 76610 Le Havre (FR)

(57) **Abrégé**

Un inverseur de poussée de turboréacteur comporte des portes creuses pivotantes (3), intégrées en jet direct dans le capotage extérieur de la nacelle et constituant en jet inversé des obstacles de déviation de flux en formant écopes. Un déflecteur mobile (24) est associé à chaque porte (3). Lors de l'ouverture de la porte (3), le déflecteur (24) se place au-dessus de la surface externe du panneau externe (4) de la porte (3) de manière à éviter l'interférence entre le flux d'échappement de la porte (3) et le flux dévié à l'extérieur de la porte (3).

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la trainée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

La demande de brevet français 96.09705 décrit un exemple de réalisation, illustré par la figure 1 des dessins joints, d'un inverseur de poussée à portes formant écopes, associé à un turboréacteur à double flux.

Le dispositif d'inversion est constitué d'un ensemble mobile et d'une structure fixe. L'ensemble mobile est constitué de portes creuses 3 formant une partie mobile 2 et constituant en position jet direct, une partie du capotage extérieur de la nacelle. La structure fixe est constituée d'une partie amont 6 en amont des portes, d'une partie aval 7 en aval des portes 3 et de poutres qui relient la partie amont 6 à la partie aval 7, la structure fixe réalisant elle aussi une partie du capotage extérieur.

Les portes 3 sont montées sur une circonférence du capotage extérieur et sont montées pivotantes dans une zone aval de leurs parois latérales sur les poutres reliant la partie aval 7 à la partie amont 6 du capotage extérieur situées de part et d'autre de ces portes, ces parois latérales relient la partie extérieure ou panneau externe 4 des portes 3, qui constitue une partie de la paroi extérieure de la nacelle à la partie intérieure 5 des portes 3 qui constitue une partie de la paroi extérieure du conduit.

La partie amont 6 de structure fixe comporte un cadre avant 8 qui peut servir de support aux moyens de commande des déplacements des portes 3, constitués par exemple par des vérins. Ces moyens de commande de déplacements des portes 3 peuvent de même être situés à d'autres endroits en périphérie de la porte 3 par exemple en aval de celle-ci. Dans ce cas c'est la structure aval 7 de structure fixe qui peut supporter les organes de commande.

En position activée, les portes 3 basculent de telle façon que la partie des portes situées en amont des pivots 9 vient obstruer plus ou moins totalement le conduit tout en dégageant un passage dans le capotage extérieur de manière à permettre au flux secondaire respectivement 13 et 14 d'être canalisé dans une direction centrifuge par rapport à l'axe du conduit d'une part dans le conduit ou tuyère 10 formé par la structure de la porte 3 et entre le bord de déviation et l'externe de la structure externe 4 de la porte 3 d'autre part. La partie aval des portes vient au voisinage de l'externe du capotage extérieur. L'angle de pivotement des portes est ajusté de manière à permettre le passage du flux et de manière à réduire fortement voire à supprimer la poussée de ce flux, et à générer une contre poussée en produisant une composante du flux dévié vers l'amont.

Le type d'inverseur de poussée décrit ci-dessus, pour des raisons de débattement de la porte imposées par des contraintes de dimensionnement aérodynamique du passage du flux dans les passages dégagés par la partie amont de la porte et le positionnement de la porte en jet inversé, présente une forme proéminente 12 en aval externe du cadre 8. Une zone d'eau morte 11 plus ou moins marquée, comme rencontré habituellement sur tous les concepts à portes traditionnels dans cette zone, réduit la section de passage du flux 14 tout en minimisant l'angle d'inversion du flux 14 vers l'avant de la nacelle. En effet cette zone morte 11 forme un bouchon aérodynamique qui réduit la section efficace du puits d'inversion.

Le fait que la section efficace du passage du flux d'inversion soit restreinte implique certaines réductions des performances aérodynamiques. Le flux d'inversion 14 étant en partie contrarié pour se diriger pleinement vers l'avant de la nacelle, celui-ci empreinte la rampe créée par l'externe du panneau externe de la porte et vient rencontrer le flux 13b sortant de l'interne 10 de la porte. Le flux 14 minimise à son tour la direction prise par le flux 13b vers l'avant de la nacelle en venant se fondre sur lui.

Un des buts de l'invention est d'obtenir un accroissement des performances aérodynamiques des portes écopes, notamment lors du fonctionnement en inversion de poussée de l'inverseur, sans encourir les inconvénients des solutions connues antérieures. Les buts sont atteints conformément à l'invention par un inverseur de poussée de turboréacteur à portes formant écopes du type précité caractérisé en ce que la porte est associée à un déflecteur mobile qui se place, lors de l'ouverture de la porte au-dessus de la surface externe du panneau externe de la porte de manière à limiter ou éviter toute interférence entre le flux d'échappement de la porte et le flux dévié à l'extérieur de la porte.

D'autres caractéristiques et avantages de l'invention seront mieux compris à la lecture de la description qui va suivre des modes de réalisation de l'invention, en référence aux dessins annexés sur lesquels :

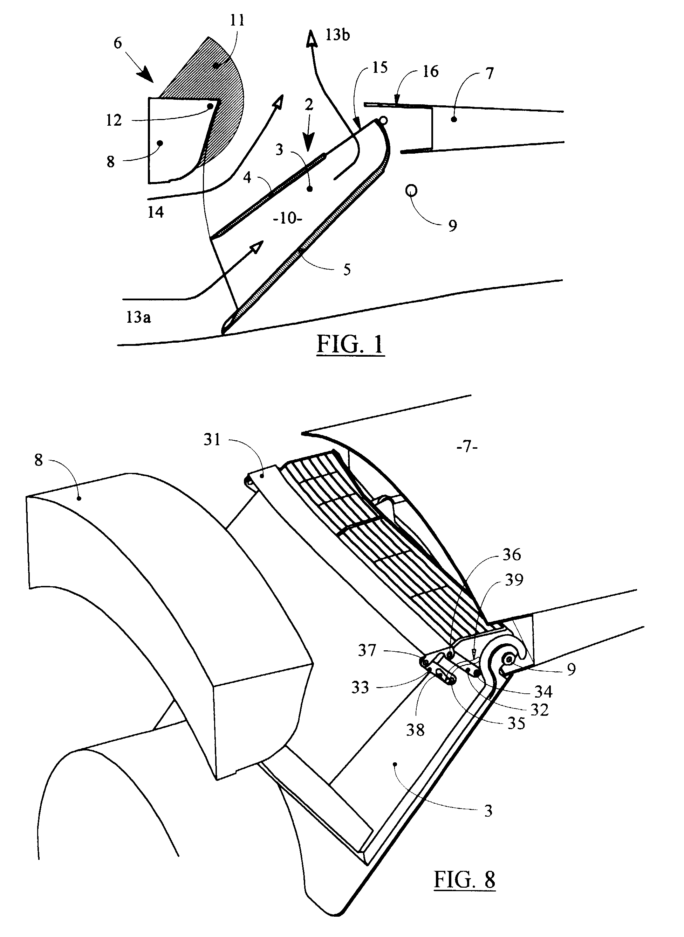

- la figure 1 représente une demi-vue schématique, en coupe longitudinale par un plan passant par l'axe de rotation d'un turboréacteur associé, d'un inverseur de poussée à portes écopes pivotantes, en position ouverte, d'un type connu et qui a fait précédemment l'objet d'une description,
- la figure 2 représente, dans une vue analogue à celle de la figure 1, en position fermée un inverseur de poussée à portes écopes selon un mode de réalisation de l'invention,
- la figure 3 représente le mode de réalisation représenté à la figure 2, en mode jet inversé,
- les figures 4 et 5 représentent en perspective le concept représenté aux figures 2 et 3,
- la figure 6 représente, dans une vue analogue à celle de la figure 1, en position fermée, un inverseur de poussée à portes écopes selon un autre mode de réalisation de l'invention,
- la figure 7 représente le mode de réalisation représenté à la figure 6, en mode jet inversé,
- la figure 8 représente en perspective le concept défini suivant les figures 6 et 7 en jet inversé,
- la figure 9 représente, dans une vue analogue à celle de la figure 1, en position fermée, un inverseur de poussée à portes écopes selon un autre mode de réalisation de l'invention,
- la figure 10 représente le mode de réalisation représenté à la figure 9, en mode jet inversé,
- les figures 11 et 12 représentent en perspective le concept défini suivant les figures 9 et 10.

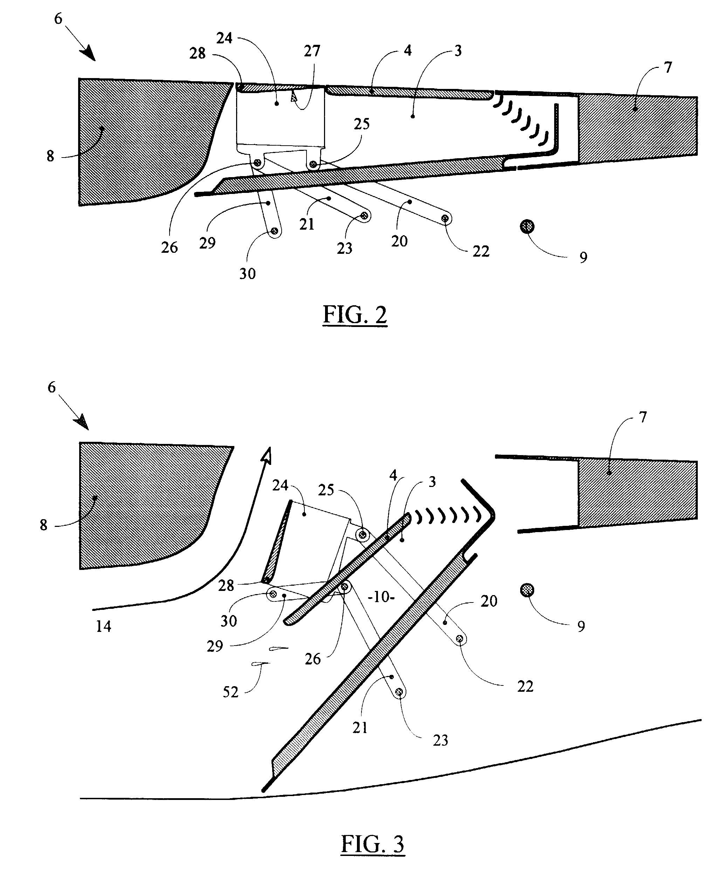

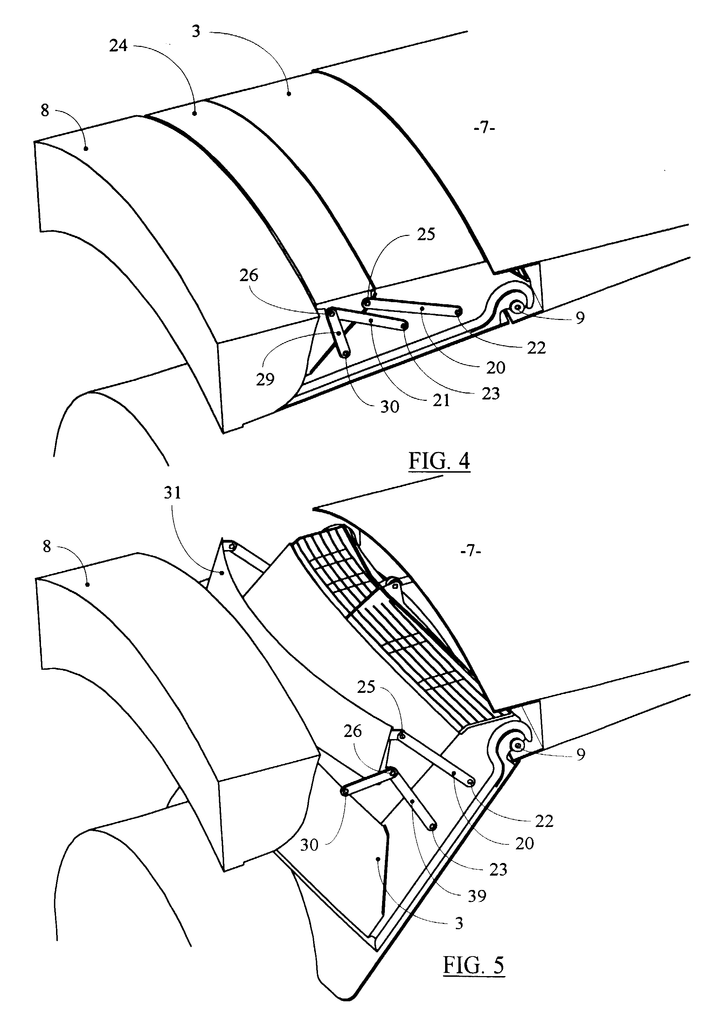

Selon un mode de réalisation de l'invention représenté sur les figures 2, 3, 4 et 5, une porte 3 à tuyère, articulée autour d'un axe de rotation 9 porté par les poutres latérales de la structure fixe 6 d'un inverseur de poussée de turboréacteur à double flux, entraîne et supporte, par l'intermédiaire d'au moins deux bielles latérales 20 et 21 articulées en 22 et 23 sur la porte 3, un déflecteur mobile 24 aux points de liaison respectivement 25 et 26.

En jet direct, l'externe du déflecteur 24 forme une partie de la nacelle externe. La surface interne 27 du déflecteur mobile 24 est de forme adaptée pour assurer les performances en jet inversé recherchées par l'homme du métier et peut être associée à d'autres éléments aérodynamiques par exemple une aube qui peut être portée par le déflecteur lui-même. La longueur du déflecteur mobile n'est limitée ni en aval ni en amont, elle dépend des dispositions retenues par l'homme de métier quant à son positionnement dans l'espace et par rapport à son environnement. De plus le détourage amont et aval du déflecteur mobile peut avoir toutes les dispositions géométriques nécessaires aux performances souhaitées. Le positionnement du déflecteur mobile en jet inversé est ajusté pour aider de façon optimale le guidage d'une partie du flux dans une direction choisie.

Le bord amont 28 du déflecteur mobile 24 peut recouvrir une partie du cadre sans pour autant interférer avec la structure fixe au cours de la manoeuvre de la porte. Cette disposition permet de réduire au moins en partie la forme proéminente 12. Pour permettre d'augmenter le débit du flux 13 passant par le conduit formant tuyère 10 de la porte en jet inversé, au moins une aube 52 peut être placée dans le conduit 10 de la porte sous le déflecteur mobile 24 en position jet direct. Cette aube 52 étant découverte en position jet inversé dirige une partie du flux dans la direction souhaitée par l'homme de métier soit vers l'intérieur de la porte soit vers l'extérieur en arrière du déflecteur mobile 24 par exemple, par ailleurs, elle peut fournir un moment d'aide à la fermeture en jet inversé.

Avantageusement, une bielle supplémentaire 29 de guidage assujettie à la structure fixe 6 par le pivot 30 est reliée à l'ensemble mobile déflecteur mobile 24 et bielles 20,21 en un point quelconque permettant d'obtenir la cinématique désirée par l'homme de métier. Sur l'exemple présenté, le point est confondu avec le pivot 26 de la bielle 21. La disposition retenue fait pivoter le bord amont du déflecteur mobile 24 dans une direction centripète par rapport à l'axe de la nacelle.Ainsi disposé, le déflecteur peut orienter une partie du flux 14 vers l'extérieur de la nacelle dans une direction offrant de meilleures performances aérodynamiques, de plus, moins de flux interfère avec celui sortant de la porte 3, améliorant de ce fait l'efficacité de celui-ci. Le bord amont 28 du déflecteur mobile 24 peut de même venir au contact du panneau externe 4 pour interdire le passage au flux 14 entre les deux éléments.

En modifiant la disposition et les paramètres du système d'embiellage, n'importe quel homme de métier peut réaliser une rotation de l'aval du déflecteur mobile 24 dans une direction centripète par rapport à l'axe de la nacelle et le positionner au voisinage du panneau externe 4 de la porte 3. Il peut de plus le rendre étanche avec ledit panneau externe pour faire barrière au flux 14 et le rediriger encore plus efficacement vers l'avant de l'externe de la nacelle.

Le déflecteur mobile 24 peut se situer intégralement en amont de la structure de la porte comme représenté sur les figures 2 à 5. Il peut chevaucher une partie de la structure externe de la porte ou peut être positionné dans une zone intermédiaire entre l'amont et l'aval de la structure du panneau externe 4. Dans cette dernière configuration avantageusement le déflecteur mobile 24 peut être articulé directement sur la structure externe 4 de la porte 3 en amont ou en aval selon le cas. De plus des aubes 52 peuvent être placées à l'intérieur du conduit 10 de la structure de la porte dans l'environnement de l'ouverture créée par le dégagement du déflecteur mobile 24 pour permettre de diriger de façon optimale une partie du flux passant dans le conduit interne 10 de porte.

Dans l'exemple de la figure 2, le pivot 30 reliant le déflecteur mobile 24 à la structure fixe 6 se situe en partie amont dudit déflecteur mobile. Cette disposition permet de faire contribuer la surface interne 27 à la retenue de la porte pendant le début de la phase de manoeuvre ou d'aider à la refermeture, réduisant de ce fait les efforts vus par le vérin dans cette phase de manoeuvre.

L'emplacement du déflecteur mobile 24 en amont de la structure de porte 3 peut aider à une meilleure évacuation de l'air lors du début de la manoeuvre de l'ouverture en dégageant immédiatement une section vers l'externe de la nacelle.

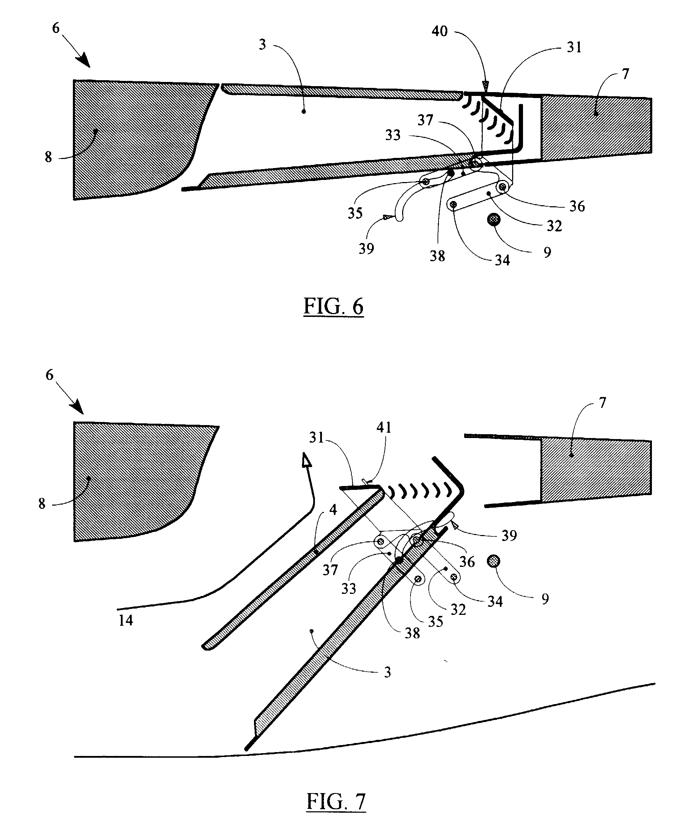

Les figures 6 à 8 montrent un autre mode de réalisation de l'invention. En position jet direct, un déflecteur mobile 31 est disposé sous la casquette fixe 40 de la virole arrière. Au moins deux bielles 32 et 33, reliées à la porte 3 et articulées en des points respectivement 34 et 35 guident et orientent le déflecteur mobile 31 en des points pivots 36 et 37. Dans cet exemple l'entrainement du déflecteur mobile 31 est réalisé par un galet 38 adapté à la bielle 33 coulissant dans une rampe 39 intégrée à la structure fixe de l'inverseur lors du déplacement de la porte 3.

Ce principe de guidage a l'avantage, comparé au système de troisième bielle d'actionnement, de piloter le déplacement du déflecteur mobile 31 par une définition adaptée. Pour éviter une interférence au début de la manoeuvre de l'ouverture de la porte 3 par exemple entre le déflecteur mobile 31 et la casquette 40, il est possible de définir une zone non active au début de la rampe 39.

Le déflecteur mobile 31 en fin de manoeuvre d'ouverture se situe dans la partie aval du panneau externe 4 de la porte 3. La cinématique par embiellage créant, dans cette disposition, un déplacement de refermeture du déflecteur mobile sur la surface de la porte, une étanchéité sur l'aval du déflecteur mobile 31 peut être rapportée. Il se crée alors une zone de surpression du côté amont du déflecteur mobile 31 et une zone basse pression du côté arrière de cet élément. Cette disposition permet d'augmenter les performances aérodynamiques du concept. De plus le déflecteur mobile 31 peut contenir au moins une ouverture associée selon les besoins d'au moins une ouïe 41 d'orientation du flux inversé traversant ladite ouverture similaire dans l'esprit à la disposition prévue par EP 0 301 955.

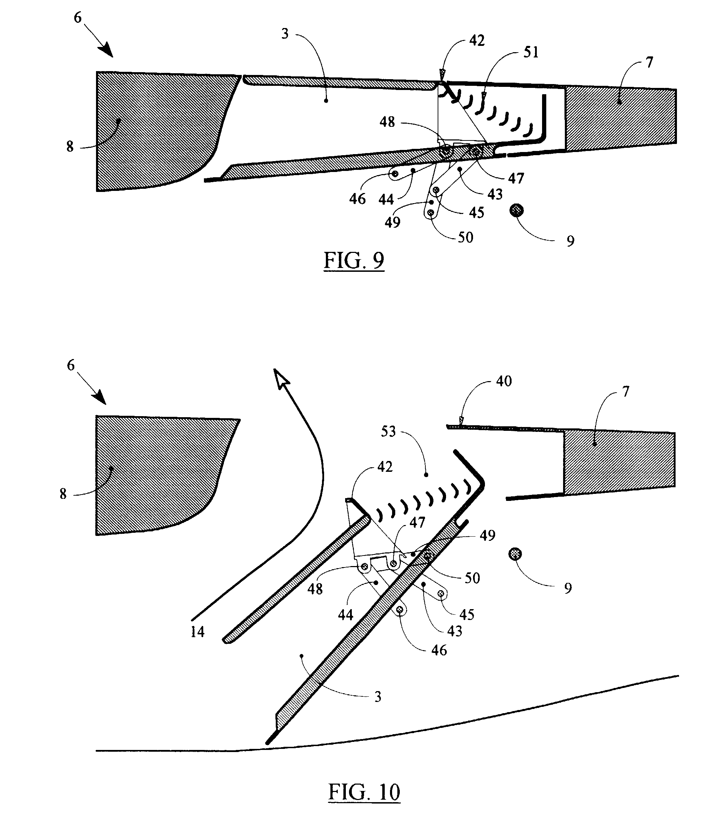

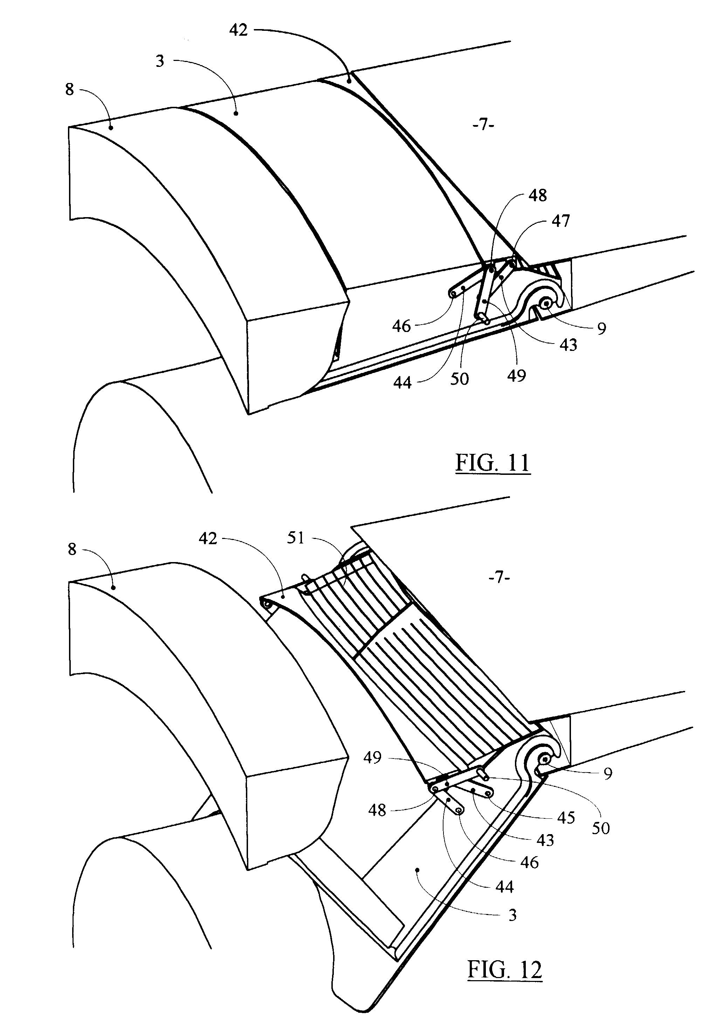

Les figures 9 à 12 proposent un autre mode de réalisation de l'invention. Dans cette variante au moins deux bielles 43 et 44,reliées à la porte 3 et articulées en des points respectivement 45 et 46, guident et orientent le déflecteur mobile 42 en des points pivots 47 et 48. Une bielle 49 reliée et articulée à la structure fixe en un point pivot 50 manoeuvre le déflecteur mobile 42 par l'intermédiaire du déplacement de la porte 3. Son point d'articulation sur le déflecteur mobile est sur la figure représenté au point 48 mais peut être situé à n'importe quel autre endroit de l'ensemble mobile jugé utile par l'homme de métier.

L'avantage de cette disposition, selon la définition des lignes aérodynamiques retenue, est de permettre l'accroissement de la section de sortie d'échappement 53 et d'augmenter le nombre d'aubes 51 ce qui a pour conséquence d'améliorer l'efficacité aérodynamique du flux 13 passant dans le canal 10 de la porte 3.

Il est bien entendu que selon les besoins recherchés, le déflecteur mobile 42 peut être aménagé en conséquence par exemple la hauteur peut être augmentée pour accroître l'effet de barrière, la surface réalisant une partie de l'externe nacelle peut être allongée vers l'amont pour augmenter la section de sortie 53 de la porte 3.

Les déflecteurs mobiles 24, 31 et 42 peuvent être manoeuvrés indépendamment de la porte 3 par tout système moteur connu de l'homme de métier et peuvent être pilotés soit simultanément, séquentiellement, en avance ou bien retardée par rapport à l'ouverture de la porte.

Dès lors il est techniquement envisageable de réaliser l'entrainement de la porte 3 par le biais des déflecteurs mobiles selon l'arrangement représenté précédemment.

## Revendications

1. Inverseur de poussée de turboréacteur à double flux comportant des portes creuses pivotantes (3), constituant en position fermée, lors d'un fonctionnement en jet direct, une partie du capotage extérieur de la nacelle et après pivotement sous l'action d'un moyen de commande des déplacements, le bord amont de porte pénétrant dans le flux, les portes (3) constituant des obstacles de déviation du flux en dégageant un passage dans le capotage extérieur, lors d'un fonctionnement en inversion de poussée, au moins une partie du flux dévié empruntant le conduit interne (10) ou tuyère de la porte (3) formant écope caractérisé en ce que ladite porte (3) est associée à un déflecteur mobile (24;31;42) qui se place, lors de l'ouverture de la porte (3) au-dessus de la surface externe du panneau externe (4) de la porte (3) de manière à limiter ou éviter toute interférence entre le flux d'échappement de la porte (3) et le flux dévié à l'extérieur de la porte (3).

2. Inverseur de poussée de turboréacteur à double flux selon la revendication 1 caractérisé en ce que ledit déflecteur mobile (24), disposé en jet direct en amont du panneau externe (4) de la porte (3), forme une partie de la surface externe de la nacelle et est supporté et entraîné par la porte (3) au moyen d'au moins deux bielles latérales de liaison (20,21) articulées à leurs extrémités.

3. Inverseur de poussée de turboréacteur à double flux selon la revendication 2 caractérisé en ce que ledit déflecteur mobile (24) est relié par une bielle supplémentaire (29) à un pivot fixe (30) solidaire de la structure fixe (6) de l'inverseur.

4. Inverseur de poussée de turboréacteur à double flux selon l'une quelconque des revendications 1 à 3 caractérisé en ce que lors de l'ouverture de la porte (3), le bord amont du déflecteur mobile (24) bascule dans un sens centripète par rapport à l'axe longitudinal de la nacelle.

5. Inverseur de poussée de turboréacteur à double flux selon l'une quelconque des revendications 1 à 3, caractérisé en ce que lors de l'ouverture de la porte (3), le bord aval du déflecteur mobile (24) bascule dans un sens centripète par rapport à l'axe longitudinal de la nacelle.

6. Inverseur de poussée de turboréacteur à double flux selon la revendication 1, caractérisé en ce que le déflecteur mobile (24) est placé en jet direct dans une zone intermédiaire entre amont et aval du panneau externe (4) de la porte (3).

7. Inverseur de poussée de turboréacteur à double flux selon la revendication 1 caractérisé en ce que ledit déflecteur mobile (31;42) est disposé en jet direct en aval du panneau externe (4) de la porte (3).

8. Inverseur de poussée de turboréacteur à double flux selon la revendication 7 caractérisé en ce que le déflecteur mobile (31) est disposé en jet direct sous la casquette amont fixe (40) de la virole arrière fixe (7) de l'inverseur.

9. Inverseur de poussée de turboréacteur à double flux selon la revendication 8 caractérisé en ce que la zone de contact en aval entre le déflecteur mobile (31) et le panneau externe (4) de porte est étanche, lorsque la porte (3) est ouverte et ledit déflecteur (31) comporte au moins une ouverture à ouïe (41).

10. Inverseur de poussée de turboréacteur à double flux selon la revendication 7 caractérisé en ce que le déflecteur mobile (42) est disposé en jet direct entre le bord aval du panneau externe (4) de la porte (3)et le bord amont de la casquette amont fixe (40) de la virole arrière fixe (7) de l'inverseur.

11. Inverseur de poussée de turboréacteur selon l'une quelconque des revendications 7 à 10, caractérisé en ce que le déflecteur mobile (31) est entrainé par la porte (3) au moyen d'au moins deux bielles (32, 33) de liaison articulées à leurs extrémités, une (33) des bielles portant un galet (38) coulissant dans une rampe de guidage (39) solidarisée à la structure fixe de l'inverseur, le déflecteur mobile (31) se plaçant, lorsque la porte (3) est ouverte, au bord aval externe du panneau externe de la porte (3), au bord de l'ouverture de sortie du flux empruntant le conduit interne (10) de la porte (3).

12. Inverseur de poussée de turboréacteur selon l'une quelconque des revendications 7 à 10 caractérisé en ce que le déflecteur mobile (41) est supporté et entrainé par la porte (3) au moyen d'au moins deux bielles de liaison (43, 44) articulées à leurs extrémités, une bielle supplémentaire (49) reliant le déflecteur mobile (42) à un pivot fixe (50) solidaire de la structure fixe de l'inverseur.

13. Inverseur de poussée de turboréacteur à double flux selon la revendication 1 caractérisé en ce que le déflecteur mobile (24; 31; 42) est associé à des moyens de commande de déplacement qui sont indépendants de la porte (3).

14. Inverseur de poussée de turboréacteur à double flux selon la revendication 1 caractérisé en ce que les déplacements de la porte (3) sont obtenus grâce aux moyens de commande de déplacement du déflecteur mobile (24).
